Europäisches Patentamt

European Patent Office

Office européen des brevets

(19)

(11) Veröffentlichungsnummer: **0 208 875**
**B1**

(12) # EUROPÄISCHE PATENTSCHRIFT

(45) Veröffentlichungstag der Patentschrift:
09.08.89

(21) Anmeldenummer: 86106826.0

(22) Anmeldetag: 20.05.86

(51) Int. Cl.⁴: **H 04 M 19/02**, H 04 M 3/22

(54) Schaltungsanordnung zur Trennung von Gleichstrom- und Wechselstromsignalanteilen eines Signalgemischs.

(30) Priorität: 27.06.85 DE 3523045

(43) Veröffentlichungstag der Anmeldung:
21.01.87 Patentblatt 87/04

(45) Bekanntmachung des Hinweises auf die Patenterteilung: 09.08.89 Patentblatt 89/32

(84) Benannte Vertragsstaaten:
AT BE CH DE FR GB IT LI LU NL SE

(56) Entgegenhaltungen:
US–A– 3 564 441
US–A– 3 772 477
US–A– 4 194 091
IEEE INTERNATIONAL SOLID-STATE CIRCUITS
CONFERENCE, Band 24, Februar 1981, Seiten
246,247,277, IEEE, New York, US; D.W. AULL et al.: "A
60V IC for a transformerless trunk and subscriber line
interface"

(73) Patentinhaber: Siemens Aktiengesellschaft Berlin
und München
Wittelsbacherplatz 2
D-8000 München 2 (DE)

(72) Erfinder: Stader, Harald, Dipl.-Ing.
Starnbergerstrasse 21
D-8000 München 71 (DE)
Erfinder: Rudolf, Hans-Werner, Dr. rer. nat.
Woerthstrasse 13
D-8000 München 80 (DE)

## Beschreibung

Die Erfindung betrifft eine Schaltungsanordnung zur Trennung von Gleichstrom- und Wechselstromsignalanteilen eines Signalgemischs.

Die Notwendigkeit einer solchen Signaltrennung entsteht ganz allgemein in Meßkreisen.

Als spezielles Anwendungsbeispiel außerhalb dieses Anwendungsbereichs sind die Verhältnisse bei modernen Teilnehmeranschlußschaltungen für den Anschluß von Teilnehmeranschlußleitungen an digitale Zeitmultiplex-Fernsprechvermittlungssysteme zu nennen.

Im Hinblick auf die Behandlung eines Signalgemischs, das auf den Teilnehmeranschlußleitungen in Form des von Sprachsignalen überlagerten Schleifenstroms auftritt, haben Teilnehmeranschlußschaltungen ganz allgemein aus dem Gleichstromanteil des Schleifenstroms Schleifenzustandsindikationen abzuleiten, und für eine optimale Signalanpassung des zu übertragenden Sprachsignals den richtigen Wechselstromwiderstand nachzubilden.

Die erwähnten modernen Teilnehmeranschlußschaltungen sind im Interesse einer nach derzeitigem Entwicklungsstand optimalen Integrationsfähigkeit in verschiedene Hardware-Blöcke unterteilt, von denen ein Hochvolt-Leistungsbaustein und ein Niedervolt-Baustein jeweils als integrierter Schaltkreis aufgebaut sind, wogegen ein Schutzelement-Baustein und ein Test-Baustein unter Verwendung diskreter Bauelemente aufgebaut sind.

Während mit Hilfe des Hochvolt-Leistungsbausteins die Aufgaben der Rufeinspeisung, der Sprachübertragung, der Herstellung der Leitungssymmetrie, der Teilnehmerspeisung und der Längsstromableitung wahrgenommen werden, ist der Niedervolt-Baustein für die Einspeisung der Gebührenimpulse, die Wahrnehmung verschiedener Überwachungsfunktionen, die Einstellung der Zweidrahtimpedanz und die Schleifenzustandserkennung eingerichtet.

Bei dieser Konstellation muß ein vom Leistungsteil kommendes Summensignal, das aus Gleich- und Wechselstromanteilen besteht, in seine Bestandteile getrennt werden, um Steuergrößen zu erhalten, mit deren Hilfe eine gewünschte Speisecharakteristik in Form eines entsprechenden Gleichstromwiderstandes und eine gewünschte Impedanz eingestellt werden können.

Grundsätzlich läßt sich eine solche Signaltrennung natürlich unter der Verwendung von RC-Gliedern erreichen. Bei dem hier interessierenden Frequenzbereich des Sprachbands von 300 Hz bis 3 400 Hz, das Kapazitätswerte von ca. 100 μf erfordert und unter Berücksichtigung des Umstandes, daß die Gleichstromsignale mit beiden Polaritäten auftreten, so daß nur ungepolte Kondensatoren Verwendung finden konnen, ergibt sich aber, daß für einen solchen Einsatz nur Folienkondensatoren infrage kommen, die in dieser Größenordnung einen großen Platzbedarf haben und teuer sind.

Die Aufgabe der Erfindung besteht daher darin, eine Schaltungsanordnung anzugeben, die Gleichstrom- und Wechselstromsignalanteile eines Signalgemischs möglichst vollständig trennt und, insbesondere im Hinblick auf im Sprachband liegende Wechselstromsignalanteile sich raumsparend und kostengünstig aufbauen läßt.

Erfindungsgemäß wird diese Aufgabe dadurch gelöst, daß eine solche Schaltungsanordnung drei Strompfade bildet, auf die sich der das Signalgemisch führende Strompfad verzweigt und von denen der erste einen ohmschen Widerstand zur Aufnahme des Gleichstromsignals enthält und die beiden anderen gleichstrommäßig abgeriegelt sind und in einem Fall eine Impedanz, an der das Wechselstromsignal abgenommen wird und im anderen Fall einen invertierenden Verstärker enthält, dessen Ausgangssignal dem Spannungsabfall im erstgenannten dieser Wechselstrompfade überlagert wird und derart eingestellt ist, daß es diesen zumindest im interessierenden Frequenzbereich kompensiert, so daß der Verzweigungspunkt der Strompfade für die Wechselstromsignale als virtuelle Erde wirkt, was zur Unterdrückung der Wechselstromanteile auf dem Gleichstrompfad dient.

Gemäß einer weiteren Ausgestaltung der Erfindung enthalten die Wechselstrompfade zur gleichstrommäßigen Abriegelung Kondensatoren. Der eine Wechselstrompfad enthält als Inverter einen Operationsverstärker, dessen nicht invertierender Eingang an Erdpotential liegt, an dessen invertierenden Eingang der betreffende Kondensator angeschlossen ist und dessen Ausgang der über einen ohmschen Gegenkopplungswiderstand mit dem invertierenden Eingang in Verbindung steht, andererseits mit dem einen Anschluß der im anderen Wechselstrompfad liegenden Impedanz verbunden ist. Die Kondensatoren, die in diesem Fall zum Einsatz kommen, brauchen dann nur eine erheblich reduzierte Kapazität aufzuweisen.

Nachstehend wird die Erfindung anhand eines Ausführungsbeispiels unter Bezugnahme auf eine Figur näher erläutert.

In dieser Figur ist als Signalquelle, die ein aus Gleichstrom- und Wechselstromanteilen bestehendes Signalgemisch $I_{DC} + I_{AC}$ liefert, eine Konstantstromquelle angenommen, die in einem Strompfad (4) liegt. Dieser Strompfad verzweigt sich am Schaltungspunkt VE in Strompfade (1), (2) und (3). Der Strompfad (1) enthält einen ohmschen Widerstand $R_{DC}$, an dem die Gleichspannungsanteile des Gemisches abgenommen werden sollen. Der Strompfad (2) enthält einen Kondensator C sowie eine Impedanz $Z_{AC}$, an der die Wechselspannungsteile des Signalgemisches abgenommen werden sollen, beispielsweise in nicht dargestellter Weise über einen Operationsverstärker.

Der Strompfad (3) enthält ebenfalls ein Kondensator C, der dieselbe Kapazität wie der im Strompfad (4) liegende Kondensator aufweisen kann und einen Operationsverstärker OP, dessen nicht invertierender Eingang (+) an Erdpotential liegt und dessen invertierender Eingang mit dem dem Schaltungspunkt VE abgewandten Anschluß des Kondensators C in Verbindung steht. Der Ausgang des Operationsverstärkers ist über einen Gegenkopplungswiderstand Rr mit dem invertierenden Eingang verbunden.

Der Ausgang des Operationsverstärkers steht außerdem mit dem einen Anschluß der Impedanz $Z_{AC}$ im Strompfad (2) in Verbindung.

Durch entsprechende Einstellung des Verstärkungsgrades des Operationsverstärkers OP ist erreicht, daß der Spannungsabfall über den Schaltelementen des Strompfades (2), also der Kondensator C und die Impedanz $Z_{AC}$ durch den Spannungshub am Ausgang des Operationsverstärkers OP gerade kompensiert wird. Hierdurch entsteht, da auf den beiden Strompfaden (2) und (3) nur Wechselströme $I_{AC}$ fließen können, für Wechselstromsignale am Schaltungspunkt (VE) ein virtuelles Erdpotential. Dies bedeutet, daß, wie gewünscht über den Widerstand $R_{DC}$ im Strompfad (1) nur Gleichströme $I_{DC}$ fließen.

Bei einer für das Sprachband zwischen 300 Hz und 3 440 Hz ausgeführten Schaltungsanordnung, die wie ein Bandpaß wirkt, dessen Durchlaßbereich jedoch weit unterhalb des Sprachbandes liegt, haben die Kondensatoren C in den Strompfaden (2) und (3) eine Kapazität von jeweils 1/uf, die Dämpfung der Wechselstromanteile im Gleichstrompfad (1) ist größer als 60 dB.

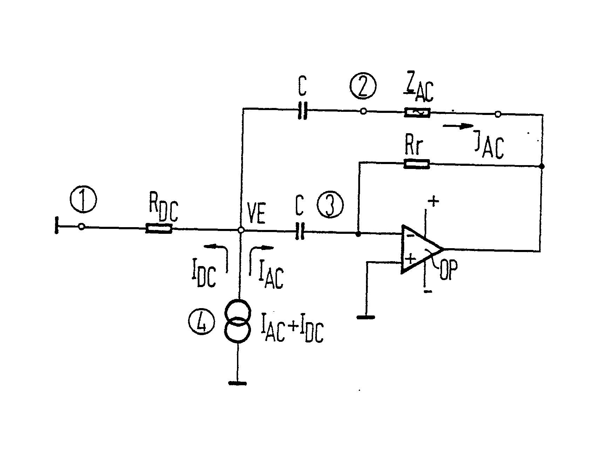

## Patentansprüche

1. Schaltungsanordnung zur Trennung von Gleichstrom- und Wechselstromsignalanteilen eines Signalgemischs, dadurch gekennzeichnet, daß sie drei Strompfade (1, 2, 3) bildet, auf die sich der das Signalgemisch führende Strompfad (4) verzweigt und von denen der erste (1) einen ohmschen Widerstand ($R_{DC}$) zur Abnahme des Gleichstromsignals enthält und die beiden anderen gleichstrommäßig abgeriegelt sind und in einem Fall eine Impedanz ($Z_{AC}$), an der das Wechselstromsignal abgenommen wird und im anderen Fall einen invertierenden Verstärker (OP ; Rr) enthält, dessen Ausgangssignal dem Spannungsabfall im erstgenannten dieser Wechselstrompfade (2) überlagert wird und derart eingestellt ist, daß es diesen zumindest im interessierenden Frequenzbereich kompensiert, so daß der Verzweigungspunkt (VE) der Strompfade für die Wechselstromsignale als virtuelle Erde wirkt.

2. Schaltungsanordnung nach Anspruch 1, dadurch gekennzeichnet, daß die Wechselstrompfade (2, 3) zur gleichstrommäßigen Abriegelung Kondensatoren (C) enthalten, und daß der eine Wechselstrompfad (3) als Inverter einen Operationsverstärker (OP) enthält, dessen nicht invertierender Eingang (+) an Erdpotential liegt, an dessen invertierenden Eingang (—) einer der betreffenden Kondensatoren (C) angeschlossen ist und dessen Ausgang, der über einen ohmschen Rückkopplungswiderstand (Rr) mit dem invertierenden Eingang (—) in Verbindung steht mit dem einen Anschluß der im anderen Wechselstrompfad liegenden Impedanz ($Z_{AC}$) verbunden ist.

3. Schaltungsanordnung nach einem der Ansprüche 1 oder 2, dadurch gekennzeichnet, daß sie zur Trennung von Gleichstrom- und Wechselstromanteilen eines Signalgemischs dient, das eine Stromquelle liefert, die zum Hochvoltteil einer aus Hochvoltteil und Niedervoltteil bestehenden elektronischen Teilnehmeranschlußschaltung gehört.

## Claims

1. Circuit for the separation of the direct current and alternating current portions of a signal mixture, characterized in that the circuit forms three current paths (1, 2, 3) onto which the current path (4) carrying the signal mixture branches, and of which the first (1) contains an ohmic resistance ($R_{DC}$) for picking off the direct current signal and the two others are blocked with respect to direct current, and in one case contains an impedance ($Z_{AC}$) at which the alternating current signal is picked off and in the other case contains an inverting amplifier (OP ; Rr), the output signal of which is overlaid on the voltage drop in the first of these alternating current paths (2) mentioned, and is set in such a way that it compensates said voltage drop at least in the frequency range of interest, so that the branching point (VE) of the current paths acts as a virtual earth for the alternating current signals.

2. Circuit according to Claim 1, characterized in that the alternating current paths (2, 3) contain capacitors (C) for blocking with respect to direct current, and in that one alternating current path (3) contains as an inverter an operational amplifier (OP), the non-inverting input (+) of which is at earth potential, to the inverting input (—) of which one of the respective capacitors (C) is connected, and the output of which, which is in connection with the inverting input (—) via an ohmic feedback resistance (Rr), is connected with one terminal of the impedance ($Z_{AC}$) lying in the other alternating current path.

3. Circuit according to one of Claims 1 or 2, characterized in that it serves to separate direct current and alternating current portions of a signal mixture supplied by a current source belonging to the high-voltage part of an electronic subscriber circuit consisting of a highvoltage part and a low-voltage part.

## Revendications

1. Montage pour séparer les composantes de courant continu et de courant alternatif d'un mélange de signaux, caractérisé en ce qu'il forme trois trajets de courant (1, 2, 3), sur lesquels se ramifie le trajet de courant (4) amenant le mélange de signaux, dont le premier (1) contient une résistance ohmique ($R_{DC}$) pour le prélèvement du signal de courant continu et les deux autres sont bloqués pour le passage du courant continu, l'un de ces deux autres trajets de courant contenant une impédance ($Z_{AC}$), sur laquelle est prélevé le signal de courant alternatif et le deuxième contenant un amplificateur inverseur (OP ; Rr) dont le signal de sortie est superposé à la chute de tension dans le premier (2) des trajets de courant alternatif, ce signal de sortie étant ajusté de manière qu'il compense la chute de tension au moins dans le domaine de fréquences d'intérêt, de sorte que le point de ramification (VE) des trajets de courant agit comme terre virtuelle pour les signaux de courant alternatif.

2. Circuit selon la revendication 1, caractérisé en ce que les trajets de courant alternatif (2, 3) contiennent des condensateurs (C) pour bloquer le passage du courant continu et que l'un (3) des trajets de courant alternatif contient, en tant qu'inverseur, un amplificateur opérationnel (OP) dont l'entrée non inverseuse (+) est au potentiel de la terre, à l'entrée inverseuse (—) duquel est connecté l'un desdits condensateurs (C) et dont la sortie, reliée à travers une résistance ohmique de contre-réaction (Rr) à l'entrée inverseuse (—), est connectée à l'une des bornes de l'impédance ($Z_{AC}$) contenue dans l'autre trajet de courant alternatif.

3. Circuit selon la revendication 1 ou 2, caractérisé en ce qu'il sert à la séparation des composantes continues et alternatives d'un mélange de signaux délivré par une source de courant appartenant à la partie de haut voltage d'un circuit électronique de raccordement d'abonné, constitué d'une partie de haut voltage et d'une partie de bas voltage.